# NEUE EUROPÄISCHE PATENTSCHRIFT

(11) **EP 0 852 031 B2**
(45) Veröffentlichungstag und Bekanntmachung des Hinweises auf die Entscheidung über den Einspruch: **10.12.2003**
(45) Hinweis auf die Patenterteilung: 14.03.2001
(21) Anmeldenummer: 96937995.7
(22) Anmeldetag: 05.09.1996
(51) Int. Cl.: G05B 19/05

(54) **AUTOMATISIERUNGSSYSTEM FÜR DAS STEUERN UND REGELN VON MASCHINEN UND ANLAGEN DER KUNSTSTOFFINDUSTRIE**
SYSTEM FOR AUTOMATING THE CONTROL AND REGULATION OF MACHINES AND PLANTS IN THE PLASTICS INDUSTRY
SYSTEME D'AUTOMATISATION DE LA COMMANDE ET DE LA REGULATION DE MACHINES ET INSTALLATIONS DANS L'INDUSTRIE DU PLASTIQUE

(30) Priorität: 19.09.1995 DE 19534768
(43) Veröffentlichungstag der Anmeldung: 08.07.1998
(73) Patentinhaber: SIEMENS AKTIENGESELLSCHAFT, 80333 München (DE)
(72) Erfinder: PALM, Berthold, D-50859 Köln (DE); SCHOVENBERG, Wolfgang, D-51107 Köln (DE)
(86) Internationale Anmeldenummer: DE9601667
(87) Internationale Veröffentlichungsnummer: WO97011415

(56) Entgegenhaltungen:
- EP-A- 0 375 487
- EP-A- 0 603 560
- WO-A-93/11475
- FR-A- 2 646 536
- US-A- 5 062 052
- US-A- 5 177 420
- US-A- 5 182 716
- US-A- 5 613 115
- US-A- 5 777 869
- AUTOMATISIERUNGSTECHNISCHE PRAXIS - ATP, Bd. 36, Nr. 12, Dezember 1994, MÜNCHEN, DE, Seiten 42-45, XP000483710 GERSTNER T ET AL: "RATIONELLES PROJEKTIEREN VON AUTOMATISIERUNGSSYSTEMEN RATIONAL PLANNING OF AUTOMATION SYSTEMS"
- "SPS-Programmierung mit ICE 1131-3", John et al., Springer Verlag, 1995
- "Automatisieren mit Simatic S5-115U", Berger, Siemens AG 1991
- "Kooperation und Konkurrenz", Herrtwich et al., Springer Verlag 1989
- "SPS Standard: IEC 1131, Programmierung in verteilten Automatisierungssystemen", Neumann et al., Oldenbourg 1995

## Beschreibung

Die Erfindung betrifft ein Automatisierungssystem für das Steuern und Regeln von Maschinen und Anlagen der Kunststoffindustrie, insbesondere für Blasformmaschinen, mit speicherprogrammierbaren Steuerungen (SPS), über die Steuer- und Regelfunktionen der Maschinen und Anlagen in gewünschter Weise bewirkbar sind und die zumindest ein Bedien- und Beobachtungsgerät sowie einen Lokalbus in Form einer Anwenderplattform aufweisen, wobei die speicherprogrammierbaren Steuerungen (SPS) anwendungsspezifische elektrische Schaltungseinzelheiten nachbildende digitale Technologiebausteine realisieren, mit denen die anwendungsspezifisch notwendigen Steuer- und Regelfunktionen modular realisierbar sind und die über Datenschnittstellen miteinander und mit der Anwenderplattform verbunden sind.

Bei der Automatisierung von Maschinen der Kunststoffindustrie war es bisher üblich, insbesondere für Blasform- und Spritzgießmaschinen, mit speziellen Hardwarekomponenten, d.h. Sonderbaugruppen zu arbeiten. Diese bekannten Sonderbaugruppen weisen eine speziell für die jeweilige Aufgabe ausgebildete Hardund Software auf. Die erreichten Arbeitsergebnisse der Kunststoffmaschinen sind gut, aber der Aufwand auf der Steuerungs- und Regelungsseite ist erheblich. Sowohl die Programme der verwendeten speicherprogrammierbaren Steuerungen als auch der Technologiebaugruppen mußten bei neuen oder geänderten Produkten den geänderten Verhältnissen an den Maschinen jeweils angepaßt werden. Manchmal wurden bei Änderungen auch neue Hardwarekomponenten erforderlich.

Es ist Aufgabe der Erfindung, ein Automatisierungssystem für das Steuern und Regeln von Maschinen und Anlagen der Kunststoffindustrie anzugeben, mit dem demgegenüber ohne Veränderungen der Hardware und der Basissoftware die Steuerungskonfiguration und der Leistungsumfang des Automatisierungssystems einfach an die Anforderungen der konkreten Aufgabe anpaßbar ist. Diese Anpassungen sollen von dem Benutzer ohne tiefergehende Systemkenntnisse unter Verwendung von standardisierten Modulen, sogenannten Basismodulen, vorgenommen werden können.

Aus der veröffentlichten Druckschrift "SPS Standard: IEC 1131, Programmierung in verteilten Automatisierungssystemen", Neumann, et al., Oldenburg 1995, ist die Programmierung von SPS-Systemen bekannt.

In der veröffentlichten Druckschrift "Kooperation und Konkurrenz", Herrtwich et al., Springer Verlag 1989 werden die Grundbegriffe einer modularen in Schichten organisierten Automatisierungsstruktur beschrieben.

Die Aufgabe wird dadurch gelöst, dass die Technologiebausteine für ein funktionsgerechtes Zusammenwirken Organisationsmodule aufweisen die zum Teil als Organisationsmodule für Funktionsmodule z.B. für Interpolationen ausgebildet sind und zum Teil als Organisationsmodule für Basismodule mit denen die notwendigen Grundschritte der Automatisierung ausführbar sind z.B. PID-Regelfunktionen Analogwert-Erfassungen etc. sowie zum Teil als Organisationsmodule für Organisationsbausteine z.B. für den Maschinenanlauf etc. ausgebildet sind, dass die Technologiebausteine einen internen Datenspeicher aufweisen, dass das Automatisierungssystem einen Speicher für Projektierungsdaten aufweist, dass das Automatisierungssystem einen externen Datenspeicher aufweist und dass die Organisationsmodule über den internen Datenspeicher und den externen Datenspeicher mit den für den Produktionsablauf notwendigen Daten, insbesondere mit Koordinationsdaten, Adressen, Parametern, Istwerten und Kurven, versorgt werden.

Durch diese Ausgestaltung des Automatisierungssystems ist es vorteilhaft möglich, auf die bisher verwendeten, aus der EP 0 603 560 A1 bekannten, steckbaren Funktionsmodule zu verzichten. Der Hardwareaufwand wird entsprechend geringer und es kann mit einer durchgehenden, bausteinähnlich aufgebauten Software gearbeitet werden, die die Projektierung und Realisierung der Steuerung und Regelung von, insbesondere verketteten, Kunststoffmaschinen erheblich verbessert. Die erfindungsgemäße Lösung weist einen speziell für Kunststoff maschinen geeigneten Softwareaufbau aus, der aus dem allgemeinen Stand der Software-Modultechnik nicht bekannt ist. Dieser Stand der Technik ergibt sich beispielsweise aus der EP 0 375 487 A1 und der FR 2 446 536, die Automaten-Programme in allgemeinerer Form beschreiben.

Durch Funktionsmodule, die wiederum Untermodule aufweisen, insbesondere Basismodule, mit denen die notwendigen Grundschritte der Automatisierung ausführbar sind, z.B. PID-Regelfunktionen, Analogwert-Erfassungen etc. können alle notwendigen Regel- und Steuerfunktionen von Kunststoffverarbeitungsmaschinen zusammenwirkend realisiert werden.

Es ist dabei vorgesehen, daß voneinander unabhängige Technologiefunktionen in eigenen Technologie-Softwarebausteinen realisiert werden. Jeder Technologiebaustein beinhaltet alle Mechanismen und Funktionen, die für die Anwendung der Technologie und die Integration des Bausteins in die Steuerungsumgebung erforderlich sind. Für Blasformmaschinen werden u.a. folgende Technologiebausteine realisiert:
- Temperaturregelung
- Wegerfassung
- Wanddickensteuerung mit Dornlageregelung
- geregelte Blasformbewegung.

Bei der Wanddickensteuerung und Dornlageregelung von Blasformmaschinen ist die Einstellung der Wanddicke von besonderer Bedeutung. Hierfür werden verschiedene Funktionsmodule mit speziellen Basismodulen eingesetzt, die sich auf spezielle Teilfunktionen beim Blasformen beziehen.

Im einzelnen handelt es dabei z.B. um eine Eingangswertbehandlung, Scalierung etc. sowie weitere Funktionen, etwa die Ablaufsteuerung, die Profilberechnung, die Düsensollwertvorgabe, die Steuerung und Regelung des Ausstoßvorganges, aber auch um eine Schlauchlängenregelung, diese unter Zuhilfenahme einer Photozelle. Beim Zusammenarbeiten mehrerer Extruder, z.B. bei der Verarbeitung unterschiedlicher Werkstoffqualitäten, wird ebenfalls ein Funktionsmodul eingesetzt, desgleichen für die Qualitätsüberwachung der hergestellten Produkte, aber auch für eine Füllstandsregelung, diese in Synchronisation mit dem Maschinentakt über die Sollwertvorgabe des jeweiligen Extruders.

Die Erfindung wird anhand von Zeichnungen näher erläutert, aus denen, ebenso wie aus den Unteransprüchen, auch weitere erfinderische Vorteile entnehmbar sind. Im einzelnen zeigen:
- FIG 1: die Softwarestruktur des erfindungsgemäßen Automatisierungssystems, und
- FIG 2: ein Automatisierungssystem nach dem heutigen Stand der Technik.

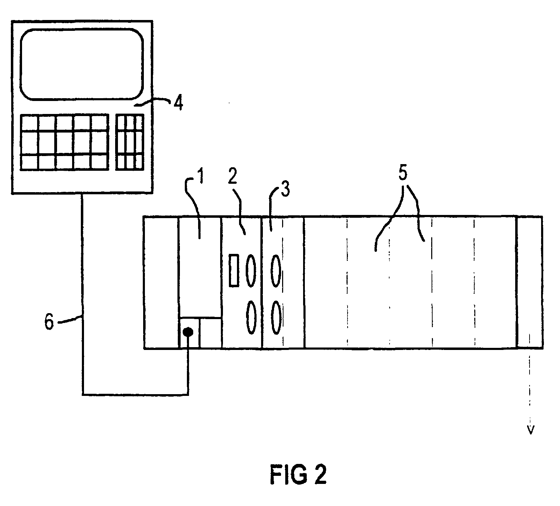

In FIG 2, die den Stand der Technik zeigt, aus dem die Bedien- und Beobachtungsebene übernommen wird, bezeichnet 1 die speicherprogrammierbare Steuerung (SPS), z.B. eine SIMATIC S5-115U der Anmelderin und 4 ein Bedien- und Beobachtungsgerät mit Bildschirm und Tastatur. Die SPS 1 und das Bedien- und Beobachtungsgerät 4, die in der Regel getrennt aufgestellt werden, sind durch eine Datenleitung 6 miteinander verbunden. Räumlich in unmittelbarer Nachbarschaft der SPS, z.B. im selben Gestell, sind die mit der SPS 1 zusammenarbeitenden - erfindungsgemäß ersetzten - Technologiebaugruppen 2 und 3 sowie die Eingabe- und Ausgabebaugruppe 5 angeordnet, die für die Kommunikation vorzugsweise durch einen Rückseitenbus o.ä. untereinander verbunden sind.

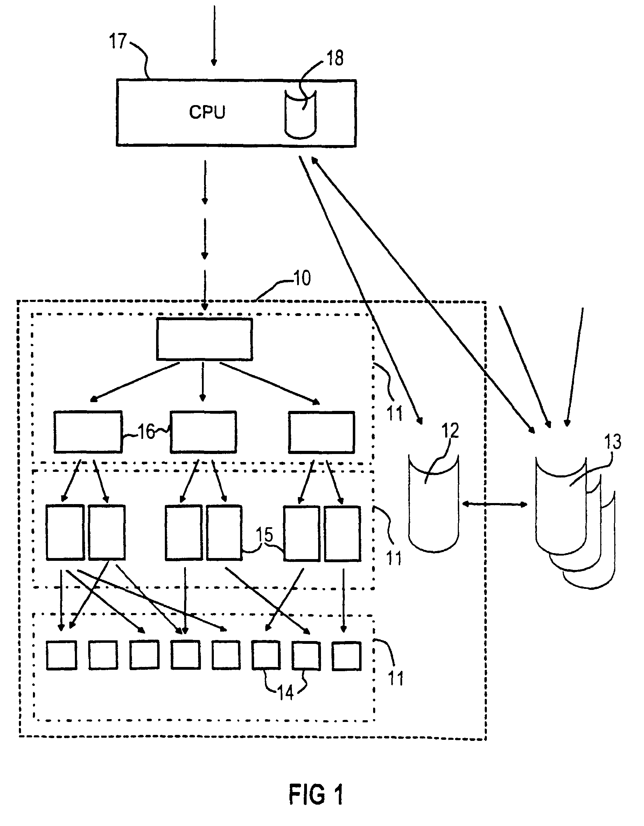

In FIG 1, die schematisch die Einzelheiten des erfindungsgemäßen Automatisierungssystems und Teile der Peripherie zeigt, bezeichnet 10 einen Technologiebaustein mit Organisationsmodulen 11. Die Organisationsmodule 11 werden über einen internen Datenspeicher 12 im Technologiebaustein und externe Datenspeicher 13 mit den für den Produktionsablauf notwendigen Daten versorgt. Hierbei handelt es sich um Aufträge, um Koordinationsdaten, Adressen, Parameter, Istwerte, Kurven etc. Erfindungsgemäße Organisationsmodule wie die Organisationsmodule 11 sind teilweise verbunden mit Basismodulen 14 (Standardprogrammbausteine) und Funktionsmodulen 15, von denen Einzelfunktionen beispielhaft in den Ansprüchen 2 bis 10 aufgeführt sind. Die Organisationsmodule 11 selbst enthalten teilweise Organisationsbausteine 16, z. B. für den Maschinenanlauf, die Zyklusdurchführung etc., oder das Maschinenverhalten bei Alarm. Die Technologiebausteine 10 sind in der CPU-Plattform ablauffähig. Diese ist mit 17 bezeichnet, sie ist mit dem Speicher 18 für Projektierungsdaten verbunden.

Als CPU wird die Standard-CPU einer speicherprogrammierbaren Steuerung SIMATIC S7-300 der Anmelderin verwendet.

Der Datenaustausch zwischen den Technologiefunktionen und den Kommunikationsdateien sowie z. B. einem Bedien- und Beobachtungsgerät, einem Programmiergerät und den Anwenderprogrammen in der SPS-CPU 17, erfolgt über Datenschnittstellen innerhalb des Systems. Diese Datenschnittstellen sind nicht Bestandteile der Technologiebausteine, sondern werden vorteilhaft von der Anwenderplattform zur Verfügung gestellt und verwaltet. Der Zugriff auf die Prozeßperipherie innerhalb der Anwenderplattform erfolgt direkt aus den Technologiebausteinen 10. Hier sind die dafür erforderlichen Treiber angeordnet. Rückmeldungen der Technologiefunktionen an die SPS-CPU 17 erfolgen vorteilhafter per Interrupt.

Insgesamt ergibt sich aufbauend auf der CPU einer SIMATIC S7-300 eine durchgängige Technologielösung, in der beliebig modular aufgebaute Technologiebausteine ablauffähig sind, die zusammen ein komplettes Steuerungs- und Regelungssystem für beliebige Technologieanforderungen bei Kunststoffmaschinen bieten.

Dabei wird sowohl die Funktionalität als auch die Schnelligkeit der bekannten aufwendigen Lösungen mit speziellen Baugruppen zumindest erreicht, teilweise sogar überboten.

## Patentansprüche

1. Automatisierungssystem für das Steuern von Regeln von Maschinen und Anlagen der Kunststoffindustrie, insbesondere für Blasformmaschinen, mit speicherprogrammierbaren Steuerungen (1), über die Steuer- und Regelfunktionen der Maschinen und Anlagen in gewünschter Weise bewirkbar sind und die zumindest ein Bedien- und Beobachtungsgerät (4) sowie einen Lokalbus in Form einer Anwenderplattform aufweisen, wobei die speicherprogrammierbaren Steuerungen (1) anwendungsspezifische elektrische Schaltungseinzelheiten nachbildende digitale Technologiebausteine (10) realisieren, mit denen die anwendungsspezifisch notwendigen Steuer- und Regelfunktionen modular realisierbar sind und die über Datenschnittstellen miteinander und mit der Anwenderplattform verbunden sind, **dadurch gekennzeichnet, dass** die Technologiebausteine (10) für ein funktionsgerechtes Zusammenwirken Organisationsmodule (11) aufweisen die zum Teil als Organisationsmodule (11) für Funktionsmodule (15) z.B. für Interpolationen ausgebildet sind und zum Teil als Organisationsmodule (11) für Basismodule (14) mit denen die notwendigen Grundschritte der Automatisierung ausführbar sind z.B. PID-Regelfunktionen Analogwert-Erfassungen etc. sowie zum Teil als Organisationsmodule (11) für Organisationsbausteine (16) z.B. für den Maschinenanlauf etc. ausgebildet sind, dass die Technologiebausteine (10) einen internen Datenspeicher (12) aufweisen, dass das Automatisierungssystem einen Speicher (18) für Projektierungsdaten aufweist, dass das Automatisierungssystem einen externen Datenspeicher (13) aufweist und dass die Organisationsmodule (11) über den internen Datenspeicher (12) und den externen Datenspeicher (13) mit den für den Produktionsablauf notwendigen Daten, insbesondere mit Koordinationsdaten, Adressen, Parametern, Istwerten und Kurven, versorgt werden.

2. Automatisierungssystem nach Anspruch 1, **dadurch gekennzeichnet, daß** es ein Funktionsmodul (15) z.B. für die Einstellung der Wanddicke bei Blasformmaschinen, aufweist, mit dem die Eingangswertbehandlung, der Offset-Abgleich und die Scalierung der Eingangswerte durchführbar ist.

3. Automatisierungssystem nach Anspruch 1 oder 2, **dadurch gekennzeichnet, daß** es ein Funktionsmodul (15) aufweist, mit dem die Ablaufsteuerung für den Speicherkopfbetrieb durchführbar ist.

4. Automatisierungssystem nach Anspruch 1, 2 oder 3, **dadurch gekennzeichnet, daß** es ein Funktionsmodul (15) aufweist, in dem die Berechnung des Wanddicken- und Ausstoßprofils aus einer Sollwertvorgabe mit Stützwerten durchführbar ist.

5. Automatisierungssystem nach Anspruch 1, 2, 3 oder 4,
**dadurch gekennzeichnet, daß** es ein Funktionsmodul (15) für die Düsensollwertvorgabe aufweist, in dem der aktuelle Profilwert mit den verfahrenstechnischen Parametern Grundspalt, Programmwahl, Profilfaktor und dynamischer Rundspalt verknüpfbar ist.

6. Automatisierungssystem nach Anspruch 1, 2, 3, 4 oder 5,
**dadurch gekennzeichnet, daß** es ein Funktionsmodul (15) zur Steuerung bzw. Regelung des Ausstoßvorganges aufweist, mit dem eine gleitende Positionsregelung durchführbar ist.

7. Automatisierungssystem nach einem oder mehreren der Ansprüche 1 bis 6, **dadurch gekennzeichnet, daß** es ein Funktionsmodul (15) aufweist, mit dem eine Schlauchlängenregelung durchführbar ist, insbesondere über eine Photozelle.

8. Automatisierungssystem nach einem oder mehreren der Ansprüche 1 bis 7, **dadurch gekennzeichnet, daß** es ein Funktionsmodul (15) aufweist, mit dem eine Füllstandsregelung durchführbar ist, insbesondere in Synchronisation mit dem Maschinentakt über die Sollwertvorgabe des Extruders.

9. Automatisierungssystem nach einem oder mehreren der vorhergehenden Ansprüche, **dadurch gekennzeichnet, daß** es ein Funktionsmodul (15) aufweist, mit dem eine Extrudersteuerung durchgeführt werden kann, insbesondere für mehrere zusammenarbeitende Extruder in Kaskadenbetrieb, in dem die Sollwertvorgabe des Leitextruders die Drehzahl der unterlagerten Extruder bestimmt.

10. Automatisierungssystem nach einem oder mehreren der vorhergehenden Ansprüche, **dadurch gekennzeichnet, daß** es ein Funktionsmodul (15) für die Qualitätsüberwachung der hergestellten Produkte aufweist, insbesondere zur Überwachung der Wanddicke der hergestellten Produkte, z.B. anhand von Masterkurven mit einstellbarem Toleranzband.

## Claims

1. System for automating the control and regulation of machines and plants of the plastics industry, in particular for blow-moulding machines, with programmable controllers (1), by means of which the control and regulation functions of the machines and plants can be brought about in the desired way and which have at least one operator-process communication and monitoring device (4) and a local bus in the form of a user platform, the programmable controllers (1) realizing digital process-oriented blocks (10) which simulate application-specific electric circuit details and with which the application-specifically necessary control and regulation functions can be realized in a modulated manner and which are connected to one another and to the user platform via data interfaces, **characterized in that**, for interacting appropriately according to their function, the process-oriented blocks (10) have organizational modules (11), some of which are designed as organizational modules (11) for functional modules (15), for example for interpolating operations, and some of which are designed as organizational modules (11) for basic modules (14), with which the necessary basic steps of the automation can be carried out, for example PID control functions, analogue-value acquisition operations etc., and some of which are designed as organizational modules (11) for organizational blocks (16), for example for machine start-up etc., **in that** the process-oriented blocks (10) have an internal data memory (12), **in that** the automation system has a memory (18) for planning and design data, **in that** the automation system has an external data memory (13), and **in that** the organization modules (11) are supplied, via the internal data memory (12) and the external data memory (13), with the data which is necessary for the production sequence, in particular with coordination data, addresses, parameters, actual values and curves.

2. Automation system according to Claim 1, **characterized in that** it has a functional module (15), for example for setting the wall thickness in the case of blow-moulding machines, with which the input value handling, the offset adjustment and the scaling of input values can be carried out.

3. Automation system according to Claim 1 or 2, **characterized in that** it has a functional module (15) with which the sequence control for the accumulator head operation can be carried out.

4. Automation system according to Claim 1, 2 or 3, **characterized in that** it has a functional module (15) in which the calculation of the wall-thickness and output-rate profiles can be carried out from a setpoint input with supporting values.

5. Automation system according to Claim 1, 2, 3 or 4, **characterized in that** it has a functional module (15) for the die setpoint input, in which the current profile value can be combined with the process-technical parameters comprising the basic gap, program selection, profile factor and dynamic round gap.

6. Automation system according to Claim 1, 2, 3, 4 or 5, **characterized in that** it has a functional module (15) for the control or regulation of the output operation, with which a sliding positional control can be carried out.

7. Automation system according to one or more of Claims 1 to 6, **characterized in that** it has a functional module (15) with which a parison-length control can be carried out, in particular via a photo cell.

8. Automation system according to one or more of Claims 1 to 7, **characterized in that** it has a functional module (15) with which a filling-level control can be carried out, in particular in synchronization with the machine cycle via the setpoint input of the extruder.

9. Automation system according to one or more of the preceding claims, **characterized in that** it has a functional module (15) with which an extruder control can be carried out, in particular for a plurality of interacting extruders in cascade operation, in which the setpoint input of the master extruder determines the rotational speed of the slave extruders.

10. Automation system according to one or more of the preceding claims, **characterized in that** it has a functional module (15) for the quality control of the products produced, in particular for monitoring the wall thickness of the products produced, for example on the basis of master curves with an adjustable tolerance band.

## Revendications

1. Système d'automatisation de la commande de réglages de machines et d'installations de l'industrie des matières plastiques, notamment de machines de moulage par soufflage, comprenant des commandes (1) à programmes enregistrés par lesquelles les fonctions de commande et de régulation des machines et installations peuvent être obtenues de la façon la plus souhaitée, et, qui comporte au moins un appareil (4) d'opérateur et d'observation ainsi qu'un bus local sous la forme d'une plate-forme d'utilisateur, les commandes (1) à programmes enregistrés réalisant les modules numériques de technologie reproduisant les unités électriques de commutations spécifiques à l'utilisation, modules par lesquels les fonctions de commande et de régulation nécessaires et spécifiques à l'utilisation peuvent être réalisés de manière modulaire et qui sont reliés par des interfaces de données, les uns aux autres, et à la plate-forme d'utilisateur, **caractérisé en ce que** les modules (10) de technologie comportent pour une coopération correcte du point de vue fonctionnel des modules (11) d'organisation, qui, pour partie, sont constitués en modules (11 ) d'organisation pour des modules (15) fonctionnels, par exemple pour des interpolations et, pour partie, en modules (11) d'organisation pour des modules (14) de base par lesquels on peut exécuter les stades de base nécessaires de l'automatisation, par exemple des fonctions de régulation PID, des relevés de valeurs analogiques, etc., ainsi, que pour partie, en modules (11) d'organisation pour des composants (16) d'organisation, par exemple pour le lancement de la machine, **en ce que** les modules (10) de technologie ont une mémoire (12) interne de données, **en ce que** le système d'automatisation a une mémoire (18) pour des données de projection, **en ce que** le système d'automatisation a une mémoire (13) externe de données et **en ce que** les modules (11) d'organisation sont alimentés par la mémoire (12) interne de données et par la mémoire (13) externe de données en les données nécessaires au déroulement de la production, notamment en des données de coordination, en des adresses, en des paramètres, en des valeurs réelles et en des courbes.

2. Système d'automatisation suivant la revendication 1, **caractérisé en ce qu'**il comporte un module (15) de fonctionnement, par exemple pour le réglage de l'épaisseur de la paroi dans des machines de moulage par soufflage, par lequel on peut effectuer le traitement des valeurs initiales, le réglage de l'offset et le changement d'échelle des valeurs initiales.

3. Système d'automatisation suivant la revendication 1 ou 2, **caractérisé en ce qu'**il comporte un module (15) de fonctionnement par lequel on peut effectuer la commande de sortie pour le fonctionnement de la tête de mémoire.

4. Système d'automatisation suivant la revendication 1, 2 ou 3, **caractérisé en ce qu'**il comporte un module (15) de fonctionnement, dans lequel on peut effectuer le calcul du profil de l'épaisseur de paroi et du profil de sortie à partir d'une prescription de valeur de consigne avec des valeurs de référence.

5. Système d'automatisation suivant la revendication 1, 2, 3 ou 4, **caractérisé en ce qu'**il comporte un module (15) de fonctionnement pour la prescription de valeur de consigne de filière, dans lequel on peut combiner la valeur instantanée de profil aux paramètres de la technique du procédé, fente de base, choix du programme, facteur de profil, et fente ronde dynamique.

6. Système d'automatisation suivant la revendication 1, 2, 3, 4 ou 5 **caractérisé en ce qu'**il comporte un module (15) de fonctionnement pour la commande et la régulation du processus de sortie, par lequel on peut effectuer une régulation de position glissante.

7. Système d'automatisation suivant l'une ou plusieurs des revendications 1 à 6, **caractérisé en ce qu'**il comporte un module (15) de fonctionnement, par lequel on peut effectuer une régulation de la longueur de tuyau souple, notamment par une cellule photoélectrique.

8. Système d'automatisation suivant l'une ou plusieurs des revendications 1 à 7, **caractérisé en ce qu'**il comporte un module (15) de fonctionnement, par lequel on peut effectuer un réglage du niveau de remplissage, notamment en synchronisation avec le cycle de la machine par la prescription de la valeur de consigne de l'extrudeuse.

9. Système d'automatisation suivant l'une ou plusieurs des revendications précédentes, **caractérisé en ce qu'**il comporte un module (15) de fonctionnement, par lequel on peut effectuer une commande de l'extrudeuse, notamment pour plusieurs extrudeuses qui travaillent ensemble en un fonctionnement en cascade, dans lequel la valeur de consigne prescrite de l'extrudeuse menante détermine la vitesse de rotation de l'extrudeuse subordonnée.

10. Système d'automatisation suivant l'une ou plusieurs des revendications précédentes, **caractérisé en ce qu'**il comporte un module (15) de fonctionnement pour la surveillance de la qualité des produits fabriqués, notamment pour la surveillance de l'épaisseur de paroi des produits fabriqués, par exemple au moyen de courbes maîtres à bande de tolérance réglable.
